# EUROPEAN PATENT APPLICATION

(11) **EP 4 748 646 A1**
(43) Date of publication of application: **27.05.2026**
(21) Application number: 24215015.9
(22) Date of filing: 25.11.2024
(51) Int. Cl.: B60Q 1/068, B60Q 1/076, F16D 1/108, F16D 1/116

(54) **A MALE AND A FEMALE COUPLING ELEMENT FOR A STEPPER MOTOR AND A VEHICLE HEADLAMP ASSEMBLY**

(71) Applicant: Hella Autotechnik Nova s.r.o., 78985 Mohelnice (CZ)
(72) Inventor: Mikulka, Vaclav, 78322 Cholina (CZ)
(74) Representative: Behr-Wenning, Gregor

(57) **Abstract**

A male coupling element (11) for inserting into a female coupling element (21), a corresponding female coupling element (21), and an assembly comprising both coupling elements (11, 21) for connecting a vehicle lamp assembly with a stepper motor shaft (31). The male coupling element (11) has snap fingers (17) and guiding elements (18) protruding from a support base (16) in a direction of a joint axis X. The snap fingers (17) and the guiding elements (18) are arranged on the support base (16) along an imaginary circular or polygonal line. Each snap finger (17) has a latching portion (172), and an elongated flexible portion (171) for allowing the latching portion (172) to flex inwardly and outwardly with respect to the joint axis X. The female coupling element (21) comprises a receiving passage (28) for the snap fingers (17) and the guiding elements (18).

## Description

### Technical Field

This invention relates to a male and a female coupling element to be axially coupled, in particular to couple an external stepper motor shaft with an external headlamp assembly of a vehicle.

### Background of the Invention

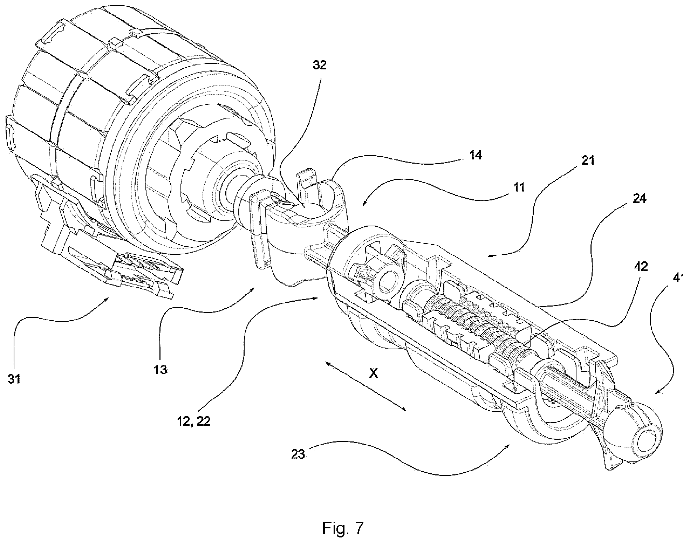

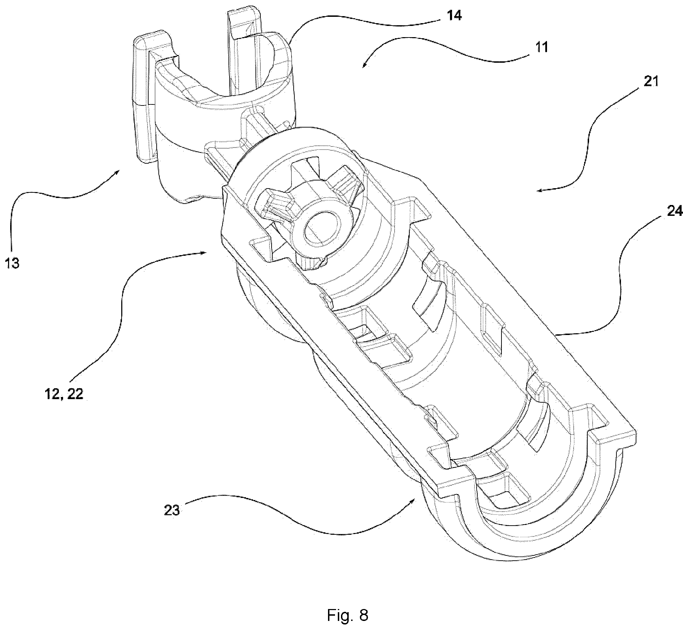

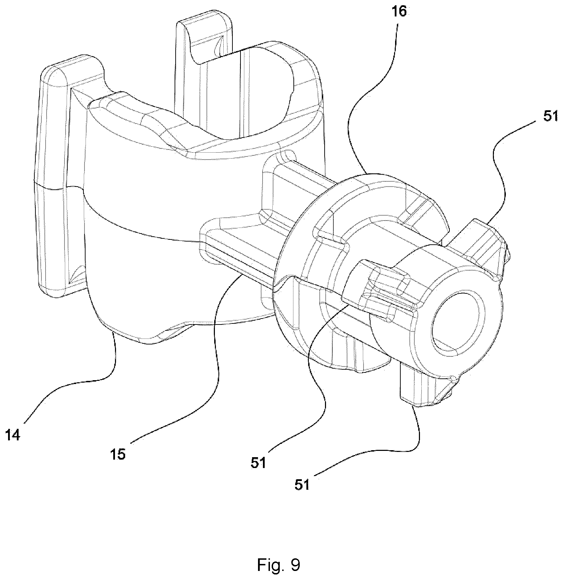

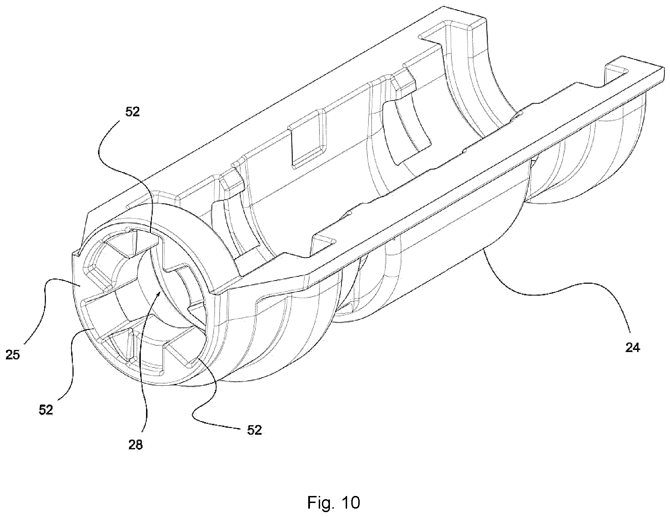

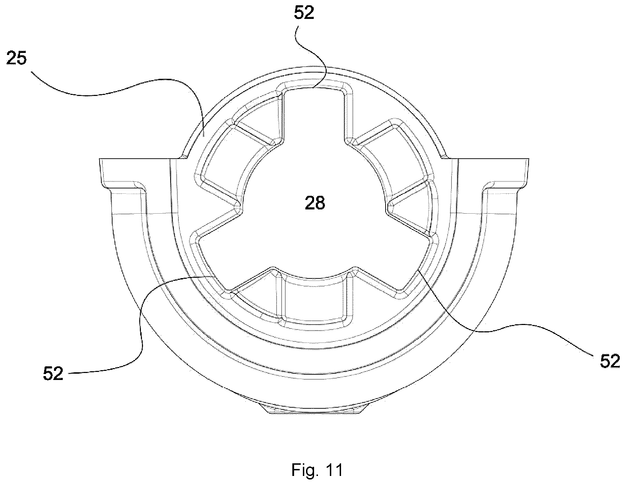

There are male and female coupling elements known in the prior art to axially couple a stepper motor shaft with a headlamp assembly (in other words, a light module) of a vehicle. The known connection is based on a bayonet-type mount along a joint axis X (see Figures 7 to 11). The male coupling element 11 comprises an elongated body 15 with a plurality of radially extending protrusions 51 with respect to the joint axis X. The female coupling element 21 comprises a front wall 25, a rear wall 27 and a receiving passage 28 therebetween. The receiving passage 28 has an inner surface comprising a plurality of recesses 52 allowing the radially extending protrusions 51 of the male coupling element 11 to pass through. The rear wall has an abutting surface on which the radially extending protrusions 51 abut when the male coupling element 11 is axially rotated after full insertion into the female coupling element 21. Disadvantageously, such a bayonet-type mount is prone to disconnecting when experiencing vibrations, which is often the case in coupling an external stepper motor shaft with an external headlamp assembly of a vehicle. Within the context of this invention, an "external headlamp" means a headlamp mounted on or in a vehicle, thus being an integral part of that vehicle, or an additional headlamp of a vehicle, which is not an integral part of that vehicle (such as a fog light or a headlamp ramp).

The European patent application EP 3115621 A1 discloses a light module fastening assembly, and in particular (see p. 0027 and on Figs. 9A to 11D of said document) an insert to be axially inserted into a carrier receptacle. The insert comprises four snap fingers and four wedges, each snap finger having an elongated flexible portion and a latching portion, each wedge having a top wedge surface decreasing in thickness in the insertion direction. The carrier receptacle comprises a receptacle front wall, a receptacle rear wall with a receptacle passage therebetween, having a receptacle interior surface shaped and sized to receive and secure the insert. The receptacle interior surface comprises a plurality of wedge stops, each having a passage stop wall and a top surface decreasing in thickness in the insertion direction. The passage stop walls are perpendicular to the top surface and are configured to directly abut wedge ledges formed on each wedge when the insert is seated at the desired depth inside the carrier receptacle. The abutment of the wedge ledges and the abutment of the top wedge surfaces with the receptacle interior surface provides rotational securement and lateral securement in the insertion direction. Upon full insertion of the insert, the latching portions flex outwardly to engage the carrier receptacle rear wall to provide lateral securement in a direction opposite the insertion direction.

Disadvantageously, the full insertion of the insert in the carrier receptacle is axially defined in the insertion direction only by means of abutting the wedge ledges and the top wedge surfaces on the insert with the receptacle interior surface. What is more, since the wedges are arranged on the insert body surface, they only provide limited guiding of the insert into the carrier receptacle passage, resulting in a more difficult and slower assembly. In addition to that, the latching portions of the snap fingers have a flat surface at the tip, also amounting to a more difficult and slower assembly. Furthermore, the light module fastening assembly itself consists of three parts (a ball stud, the insert and the carrier receptacle) and is strictly symmetrical.

The US patent US 7452154 B2 discloses a universal joint component for an automotive lamp unit, comprising a male coupling element to be axially inserted into a female coupling element, such a reflector or a lamp body of an automotive lamp unit (see Fig. 2 of said document). The male coupling element comprises a tubular section having a pair of flexible, gradually rising catches arranged opposite one another and with catching surfaces at the tip thereof to be axially inserted and latched into an installation hole of the female coupling element. The installation hole has a diameter to allow the entry of the tubular section, the diameter being slightly smaller than the distance between the tips of the flexible catches. Each flexible catch is inwardly bent when inserted through the installation hole but regains its original form once tubular section is completely inserted into the installation hole. The catching face of the flexible catch is latched by a recessed rim section in the back of the installation hole to provide. After full insertion, a disc-shaped outer brim, formed around the tubular section below the catches, touches the female coupling element surface around the installation hole.

Disadvantageously, there are no features on the male coupling element body surface or on the inner surface of the installation hole to provide guiding when the male coupling element is inserted into the installation hole, resulting in a more difficult and slower assembly.

There is therefore a need in the prior art and the object of the present invention is to provide a male and a female coupling element for an easily assemblable snap-action based joint.

### Summary of the Invention

The shortcomings of the solutions known in the prior art are to some extent eliminated by a male coupling element according to claim 1 and a female coupling element according to claim 7. The preferred embodiments of the male coupling element are disclosed in claims 2 to 6 and the preferred embodiments of the female coupling element are disclosed in claims 8 to 11.

The male coupling element is suitable for inserting into a female coupling element at a first end and for coupling with an external stepper motor shaft or an external headlamp assembly of a vehicle at a second end. The first and second end are arranged along a joint axis X. The first end comprises:
a. an elongated body terminated with a support base perpendicular to the joint axis X;
b. a plurality of snap fingers protruding from the support base in the direction of the joint axis X, each snap finger including an elongated flexible portion and a latching portion, the elongated flexible portion allowing the latching portion to flex inwardly and outwardly with respect to the joint axis X, the latching portion comprising a first abutting surface; and
c. a plurality of guiding elements protruding from the support base in the direction of the joint axis X, each guiding element including an elongated portion.

The snap fingers and the guiding elements are arranged on the support base along an imaginary circular or polygonal line. The snap fingers and the guiding elements have a unique size or location on the support base, they cannot be interchanged.

The underlying idea of the male coupling element according to the present invention lies in the above-mentioned guiding elements. The guiding elements protruding from the support base to a roughly identical distance from the support base as the snap fingers help the snap fingers to reach a desired position as soon as the snap fingers start to be inserted into the female coupling element (see below). Such a guiding action results in an easy and fast assembly.

Preferably, the latching portion of the snap finger comprises a top wedge surface decreasing in thickness towards the first end, thus easing the insertion of the snap fingers through the female coupling element.

Preferably, the elongated portion of the guiding element comprises an elongated protrusion to provide a unique (key-like) or a universal guiding action.

Preferably, the snap fingers and the guiding elements are arranged on the support base in an alternating manner along an imaginary circular or polygonal line such that each guiding element is arranged between two snap fingers. The alternation of the snap fingers and the guiding elements results in a symmetrical male coupling element around the joint axis X, thus generally easing the assembly.

Preferably in alternative embodiment A, the second end of the male coupling element comprises a receiving portion for coupling with the external stepper motor shaft of a vehicle, in particular for coupling with a ball stud having a ball end and protruding from the external stepper motor shaft in the direction of the joint axis X.

Preferably in alternative embodiment B, the second end of the male coupling element comprises a receiving portion for coupling with the external headlamp assembly of a vehicle, in particular for coupling with a tubular clamping element protruding from the external headlamp assembly in the direction of the joint axis X.

The female coupling element is suitable for receiving a male coupling element at a first end and for coupling with an external stepper motor shaft or an external headlamp assembly of a vehicle at a second end. The first and second end are arranged along a joint axis X. The first end comprises:
a. a front wall comprising a plurality of protrusions extending in the direction of the joint axis X, each protrusion comprising a second abutting surface perpendicular to the joint axis X;
b. a rear wall having a third abutting surface; and
c. a receiving passage between the front and the rear wall, having an inner surface comprising a plurality of first recesses and a plurality of second recesses, each recess extending along the joint axis X.

The underlying idea of the male coupling element according to the present invention lies in the above-mentioned plurality of recesses corresponding in number and shape to the snap fingers and the guiding elements of the male coupling element (see above). These recesses help the snap fingers and the guiding elements to reach a desired position as soon as the snap fingers start to be inserted into the female coupling element. Such a guiding action results in an easy and fast assembly.

Preferably, the first recess has an inner wedge surface decreasing in thickness towards the first end to match with the top wedge surface of the snap finger (see above), thus easing the insertion of the snap fingers through the female coupling element.

Preferably, the second recess is elongated to match with the elongated protrusion of the guiding element, thus providing a unique (key-like) or a universal guiding action and easy assembly of the joint.

Preferably in alternative embodiment A corresponding to the alternative embodiment A of the male coupling element, the second end of the female coupling element comprises a receiving portion for coupling with the external headlamp assembly of a vehicle, in particular for coupling with a tubular clamping element protruding from the external headlamp assembly in the direction of the joint axis X.

Preferably in alternative embodiment B corresponding to the alternative embodiment B of the male coupling element, the second end of the female coupling element comprises a receiving portion for coupling with the external stepper motor shaft of a vehicle, in particular for coupling with a ball stud having a ball end and protruding from the external stepper motor shaft in the direction of the joint axis X.

Both alternative embodiments A and B result in a functional snap action-based coupling of the external stepper motor shaft and the external headlamp assembly of a vehicle.

The object of the present invention is achieved by an assembly of the above-mentioned male and female coupling element, according to claim 12. The preferred embodiments of the assembly are disclosed in claims 13 to 14.

In the assembly, the snap fingers and the guiding elements of the male coupling element are inserted in a form-fitting manner into the receiving passage of the female coupling element along the joint axis X. Each latching portion of the snap finger is flexed outwardly with respect to the joint axis X such that the first abutting surface abuts on the third abutting surface of the rear wall of the female coupling element, thus providing a latching action of the snap fingers and axial securement of the joint. The support base of the male coupling element abuts on each second abutting surface of the protrusion of the front wall of the female coupling element, thus providing a further axial securement of the joint.

Preferably, each snap finger comprising a top wedge surface is insertable during insertion into one first recess of the receiving passage, the first recess comprising an inner wedge surface of a corresponding shape, thus providing a better guided insertion of the snap fingers in the passage.

Preferably, each guiding element comprising an elongated protrusion is inserted in a form-fitting manner into one second recess of the receiving passage, the second recess being elongated, thus providing a unique (key-like) or a universal guiding action, rotational securement and easy assembly of the joint.

### Description of Drawings

A summary of the invention is further described by means of exemplary embodiments thereof, which are described with reference to the accompanying drawings, in which:
Figures 1 and 2 show an assembly of the male and female coupling element in an alternative embodiment A from a perspective view.
Figure 3 shows the male coupling element in an alternative embodiment A from a perspective view.
Figure 4 shows the female coupling element in an alternative embodiment A from a perspective view.
Figure 5 shows the first end of the female coupling element A from a front view.
Figure 6 shows an assembly of the male and female coupling element in an alternative embodiment A in a sectional view along the joint axis X.
Figures 7 and 8 show an assembly of the male and female coupling element according to the prior art from a perspective view.
Figure 9 shows the male coupling element according to the prior from a perspective view.
Figure 10 shows the female coupling element according to the prior from a perspective view.
Figure 11 shows the first end of the female coupling element A according to the prior from a front view.

### Exemplary Embodiments of the Invention

The invention will be further described by means of exemplary embodiments with reference to the respective drawings.

### Example 1

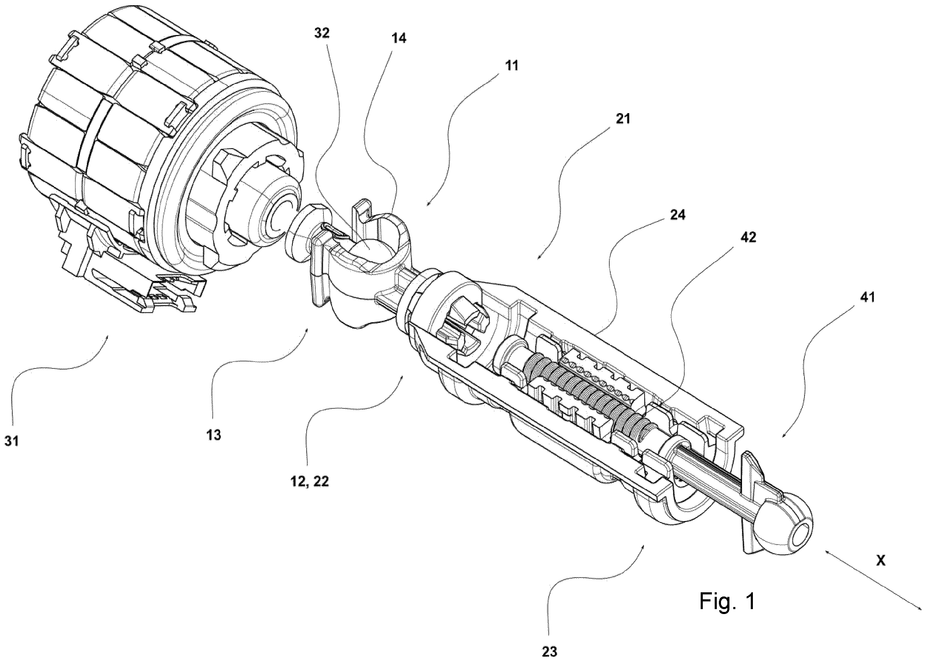

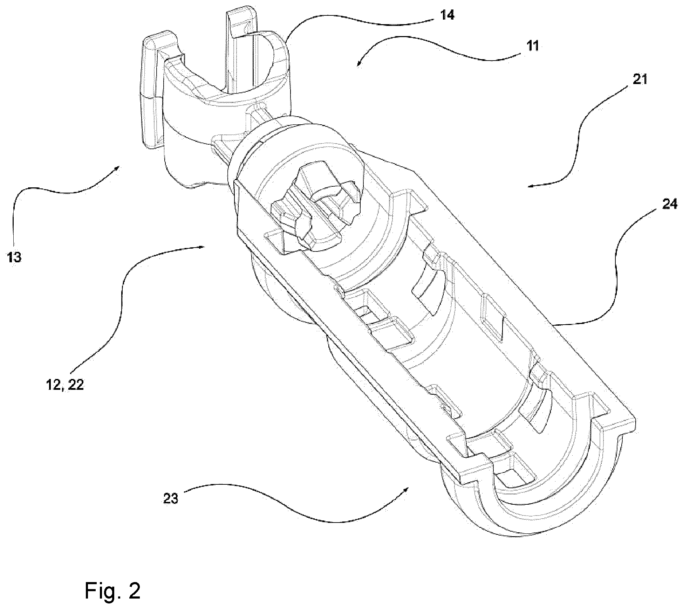

Figures 1 and 2 show an assembly of the male and female coupling element 1, 2 in an alternative embodiment A. The male coupling element 11 is inserted into the female coupling element 21 at a first end 12 and coupled with an external stepper motor shaft 31 of a vehicle at a second end 13, comprising a receiving portion 14 for coupling with a ball stud 32 having a ball end and protruding from the external stepper motor shaft 31 in the direction of the joint axis X. The female coupling element 21 receives the male coupling element 11 at a first end 22 and is coupled with an external headlamp assembly 41 of a vehicle at a second end 23, comprising a receiving portion 24 for coupling with a tubular clamping element 42 protruding from the external headlamp assembly 41 in the direction of the joint axis X. The first and second ends of the male and female coupling element 1, 2 are arranged along the joint axis X.

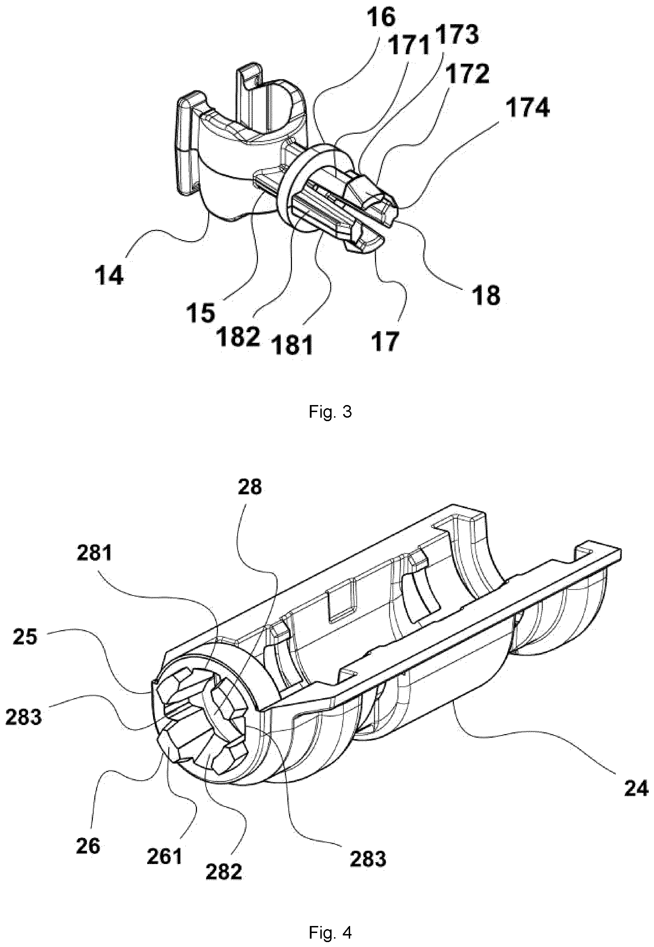

According to Figure 3, the first end 12 of the male coupling element 11 comprises:
a. an elongated body 15 terminated with a support base 16 perpendicular to the joint axis X;
b. two snap fingers 17 protruding from the support base 16 in the direction of the joint axis X, each snap finger 17 including an elongated flexible portion 171 and a latching portion 172, the elongated flexible portion 171 allowing the latching portion 172 to flex inwardly and outwardly with respect to the joint axis X, the latching portion 172 comprising a first abutting surface 173 and a top wedge surface 174 decreasing in thickness towards the first end 12; and
c. two guiding elements 18 protruding from the support base 16 in the direction of the joint axis X, each guiding element 18 including an elongated portion 181 comprising an elongated protrusion 182.

The snap fingers 17 and the guiding elements 18 are arranged on the support base 16 in an alternating manner along an imaginary circular line such that each guiding element 18 is arranged between two snap fingers 17.

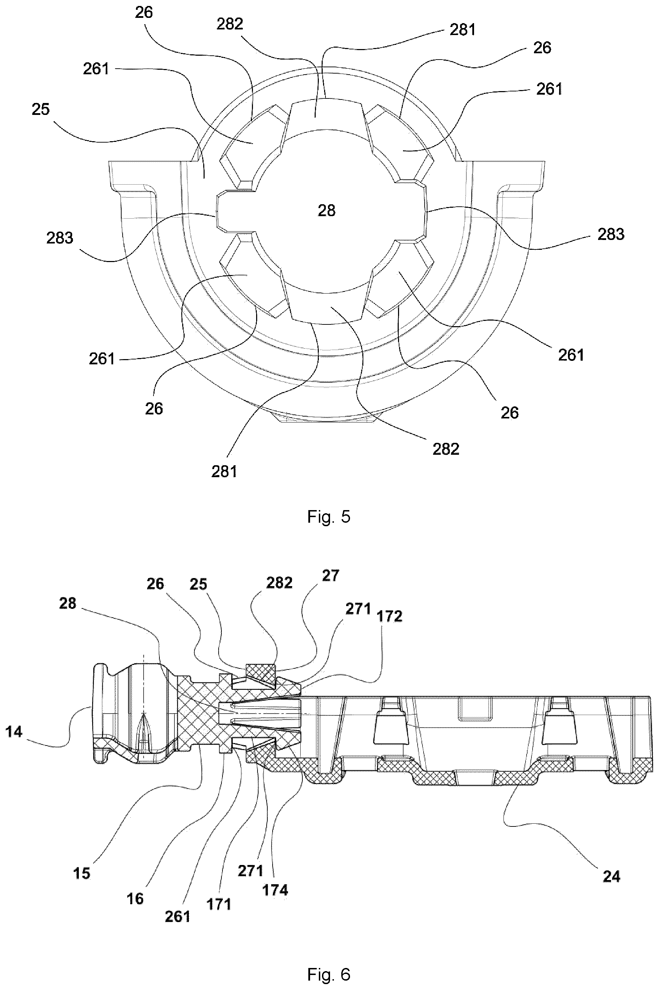

According to Figures 4 and 5, the first end 22 of the female coupling element 21 comprises:
a. a front wall comprising 25 four protrusions 26 extending in the direction of the joint axis X, each protrusion 26 comprising a second abutting surface 261 perpendicular to the joint axis X;
b. a rear wall 27 having a third abutting surface 271; and
c. a receiving passage 28 between the front and the rear wall 25, 27, having an inner surface comprising two first recesses 281 having an inner wedge surface 282 decreasing in thickness towards the first end 22 to match with the top wedge surface 174 of the snap finger 17 and two elongated second recesses 283 to match with the elongated protrusion 182 of the guiding element 18, each recess 281, 283 extending along the joint axis X.

During assembly, two snap fingers 17 and two guiding elements 18 of the male coupling element 11 are inserted in a form-fitting manner into the receiving passage 28 of the female coupling element 21 along the joint axis X. Each snap finger 17 comprising the top wedge surface 174 is inserted into one first recess 281 comprising the inner wedge surface 282 of a corresponding shape. At the same time, each guiding element 18 comprising the elongated protrusion 182 is inserted in a form-fitting manner into one elongated second recess 283 of a corresponding shape. Once fully inserted (Figure 6), each latching portion 172 of the snap finger 17 is flexed outwardly with respect to the joint axis X such that the first abutting surface 173 abuts on the third abutting surface 271 of the rear wall 27 of the female coupling element 21. The support base 16 of the male coupling element 11 abuts on each second abutting surface 261 of all four protrusions 26 of the front wall 25 of the female coupling element 21.

### Example 2

An assembly of the male and female coupling element 11, 21 in an alternative embodiment B is provided (not shown in Figures). The male coupling element 11 is inserted into the female coupling element 21 at a first end 12 and coupled with an external headlamp assembly 41 of a vehicle at a second end 13, comprising a receiving portion 19 for coupling with a tubular clamping element 42 protruding from the external headlamp assembly 41 in the direction of the joint axis X. The female coupling element 21 receives the male coupling element 11 at a first end 22 and is coupled with an external stepper motor shaft 31 of a vehicle at a second end 23, comprising a receiving portion 29 for coupling with a ball stud 32 having a ball end and protruding from the external stepper motor shaft 31 in the direction of the joint axis X. By analogy, all the remaining features are identical to the embodiment of Example 1.

### Industrial applicability

The male and female coupling elements according to the present invention can be used to couple an external stepper motor shaft with an external headlamp assembly of a vehicle.

### Reference List

- 11: male coupling element
- 12: first end of the male coupling element 11
- 13: second end of the male coupling element 11
- 14: receiving portion of the male coupling element 11 (embodiment A)
- 15: elongated body
- 16: support base
- 17: snap finger
- 171: elongated flexible portion
- 172: latching portion
- 173: first abutting surface
- 174: top wedge surface
- 18: guiding element
- 181: elongated portion
- 182: elongated protrusion
- 19: receiving portion of the male coupling element 11 (embodiment B)
- 21: female coupling element
- 22: first end of the female coupling element 21
- 23: second end of the female coupling element 21
- 24: receiving portion of the female coupling element 21 (embodiment A)
- 25: front wall
- 26: protrusion
- 261: second abutting surface
- 27: rear wall
- 271: third abutting surface
- 28: receiving passage
- 281: first recess
- 282: inner wedge surface
- 283: second recess
- 29: receiving portion of the female coupling element 21 (embodiment B)
- 31: stepper motor shaft
- 32: ball stud
- 41: headlamp assembly
- 42: tubular clamping element
- 51: radially extending protrusion of the male coupling element (prior art)
- 52: recess of the female coupling element (prior art)

## Claims

1. A male coupling element (11) for inserting into a female coupling element (21) at a first end (12) and for coupling with an external stepper motor shaft (31) or an external headlamp assembly (41) of a vehicle at a second end (13), the first and second end (12, 13) being arranged along a joint axis X, **characterised in that** the first end (12) of the male coupling element (11) comprises:
a. an elongated body (15) terminated with a support base (16) perpendicular to the joint axis X;
b. a plurality of snap fingers (17) protruding from the support base (16) in the direction of the joint axis X, each snap finger (17) including an elongated flexible portion (171) and a latching portion (172), the elongated flexible portion (171) allowing the latching portion (172) to flex inwardly and outwardly with respect to the joint axis X, the latching portion (172) comprising a first abutting surface (173); and
c. a plurality of guiding elements (18) protruding from the support base (16) in the direction of the joint axis X, each guiding element (18) including an elongated portion (181);
wherein the snap fingers (17) and the guiding elements (18) are arranged on the support base (16) along an imaginary circular or polygonal line.

2. The male coupling element (11) according to claim 1, **characterised in that** the latching portion (172) of the snap finger (17) comprises a top wedge surface (174) decreasing in thickness towards the first end (12).

3. The male coupling element (11) according to claim 1 or 2, **characterised in that** the elongated portion (181) of the guiding element (18) comprises an elongated protrusion (182).

4. The male coupling element (11) according to any of the previous claims, **characterised in that** the snap fingers (17) and the guiding elements (18) are arranged on the support base (16) in an alternating manner along an imaginary circular or polygonal line such that each guiding element (18) is arranged between two snap fingers (17).

5. The male coupling element (11) according to any of the previous claims, **characterised in that** the second end (13) of the male coupling element (11) comprises a receiving portion (14) for coupling with the external stepper motor shaft (31) of a vehicle, in particular for coupling with a ball stud (32) having a ball end and protruding from the external stepper motor shaft (31) in the direction of the joint axis X.

6. The male coupling element (11) according to any of claims 1 to 4, **characterised in that** the second end (13) of the male coupling element (11) comprises a receiving portion (19) for coupling with the external headlamp assembly (41) of a vehicle, in particular for coupling with a tubular clamping element (42) protruding from the external headlamp assembly (41) in the direction of the joint axis X.

7. A female coupling element (21) for receiving a male coupling element (11) at a first end (22) and for coupling with an external stepper motor shaft (31) or an external headlamp assembly (41) of a vehicle at a second end (23), the first and second end (22, 23) being arranged along a joint axis X, **characterised in that** the first end (22) of the female coupling element (21) comprises:
a. a front wall (25) comprising a plurality of protrusions (26) extending in the direction of the joint axis X, each protrusion (26) comprising a second abutting surface (261) perpendicular to the joint axis X;
b. a rear wall (27) having a third abutting surface (271); and
c. a receiving passage (28) between the front and the rear wall (25, 27), having an inner surface comprising a plurality of first recesses (281) and a plurality of second recesses (283), each recess (281, 283) extending along the joint axis X.

8. The female coupling element (21) according to claim 7, **characterised in that** the first recess (281) has an inner wedge surface (282) decreasing in thickness towards the first end (22).

9. The female coupling element (21) according to claim 7 or 8, **characterised in that** the second recess (283) is elongated.

10. The female coupling element (21) according to any of claims 7 to 9, **characterised in that** the second end (23) of the female coupling element (21) comprises a receiving portion (24) for coupling with the external headlamp assembly (41) of a vehicle, in particular for coupling with a tubular clamping element (42) protruding from the external headlamp assembly (41) in the direction of the joint axis X.

11. The female coupling element (21) according to any of claims 7 to 9, **characterised in that** the second end (23) of the female coupling element (21) comprises a receiving portion (29) for coupling with the external stepper motor shaft (31) of a vehicle, in particular for coupling with a ball stud (32) having a ball end and protruding from the external stepper motor shaft (31) in the direction of the joint axis X.

12. An assembly of the male coupling element (11) according to any of claims 1 to 6 and the female coupling element (21) according to any of claims 7 to 11, **characterised in that** the snap fingers (17) and the guiding elements (18) of the male coupling element (11) are inserted in a form-fitting manner into the receiving passage (28) of the female coupling element (21) along the joint axis X, wherein each latching portion (172) of the snap finger (17) is flexed outwardly with respect to the joint axis X such that the first abutting surface (173) abuts on the third abutting surface (271) of the rear wall (27) of the female coupling element (21), wherein the support base (16) of the male coupling element (11) abuts on each second abutting surface (261) of the protrusion (26) of the front wall (25) of the female coupling element (21).

13. The assembly according to claim 12, **characterised in that** each snap finger (17) comprising a top wedge surface (174) is insertable during insertion into one first recess (281) of the receiving passage (28), the first recess (281) comprising an inner wedge surface (282).

14. The assembly according to claim 12 or 13, **characterised in that** each guiding element (18) comprising an elongated protrusion (182) is inserted in a form-fitting manner into one second recess (283) of the receiving passage (28), the second recess (283) being elongated.
